# EUROPÄISCHE PATENTANMELDUNG

(11) **EP 4 137 266 A1**
(43) Veröffentlichungstag der Anmeldung: **22.02.2023**
(21) Anmeldenummer: 22188982.7
(22) Anmeldetag: 05.08.2022
(51) Int. Cl.: B23Q 3/155, B65G 65/00, B65G 1/04, B23Q 3/18

(54) **PRÄZISIONS-EIN- UND/ODER AUSLAGERVORRICHTUNG, PRÄZISIONS-EIN- UND/ODER AUSLAGERSYSTEM UND VERFAHREN**

(30) Priorität: 17.08.2021 DE 102021121358
(71) Anmelder: E. Zoller GmbH & Co. KG Einstell- und Messgeräte, 74385 Pleidelsheim (DE)
(72) Erfinder: Zoller, Alexander, 74385 Pleidelsheim (DE); Würtenberger, Christoph, 70378 Stuttgart (DE)
(74) Vertreter: Daub, Thomas

(57) **Zusammenfassung**

Die Erfindung geht aus von einer Präzisions-Ein- und/oder Auslagervorrichtung (54) zu einem zumindest teilautomatisierten Einlagern und/oder Auslagern von Werkzeugen (10), insbesondere Komplettwerkzeugen (12), und/oder Werkzeugfuttern (14) in und/oder aus einem Lagerlift (16), mit zumindest einer, durch einen Handhabungsroboter (18) bestückbaren und eine Mehrzahl an Lagerplätzen (20, 22) ausbildenden Halteeinheit (24) für Werkzeuge (10), insbesondere Komplettwerkzeuge (12), und/oder Werkzeugfutter (14).

Es wird vorgeschlagen, dass die Halteeinheit (24) zumindest ein Formschlusszentrierelement (26) aufweist, welches dazu vorgesehen ist, zu einer submillimetergenauen horizontalen Ausrichtung der Halteeinheit (24) mit einem Zentrierbolzen (28) und/oder einer Zentrierausnehmung wechselzuwirken.

## Beschreibung

### Stand der Technik

Die Erfindung betrifft eine Präzisions-Ein- und/oder Auslagervorrichtung nach dem Oberbegriff des Anspruchs 1, ein Präzisions-Ein- und/oder Auslagersystem nach dem Anspruch 13 und ein Verfahren nach dem Anspruch 21.

Es ist bereits vorgeschlagen worden, dass Werkzeuge und Werkzeugaufnahmen in Lagereinrichtungen mit mehreren wechselbaren Lageretagen, wie z.B. Kardex-Lifte, eingelagert werden. Die Positioniergenauigkeit bei der Bereitstellung der jeweiligen Etagen ist jedoch oft nicht ausreichend, um eine präzise, sichere und zuverlässige automatisierte Bestückung zu gewährleisten.

Die Aufgabe der Erfindung besteht insbesondere darin, eine gattungsgemäße Vorrichtung mit vorteilhaften Eigenschaften hinsichtlich einer automatisierten Bestückung von Lagerliften bereitzustellen. Vorzugsweise besteht die Aufgabe der Erfindung darin, eine Präzision einer Bereitstellung von Lageretagen von Lagerliften zu verbessern. Die Aufgabe wird erfindungsgemäß durch die Merkmale der Patentansprüche 1, 13 und 21 gelöst, während vorteilhafte Ausgestaltungen und Weiterbildungen der Erfindung den Unteransprüchen entnommen werden können.

### Vorteile der Erfindung

Die Erfindung geht aus von einer Präzisions-Ein- und/oder Auslagervorrichtung zu einem zumindest teilautomatisierten Einlagern und/oder Auslagern von Werkzeugen, insbesondere Komplettwerkzeugen, und/oder Werkzeugfuttern in und/oder aus einem Lagerlift, mit zumindest einer, durch einen Handhabungsroboter bestückbaren und eine Mehrzahl an Lagerplätzen ausbildenden Halteeinheit für Werkzeuge, insbesondere Komplettwerkzeuge, und/oder Werkzeugfutter.

Es wird vorgeschlagen, dass die Halteeinheit zumindest ein Formschlusszentrierelement aufweist, welches dazu vorgesehen ist, zu einer submillimetergenauen horizontalen Ausrichtung der Halteeinheit mit einem Zentrierbolzen und/oder einer Zentrierausnehmung wechselzuwirken. Dadurch kann vorteilhaft eine hohe Präzision, insbesondere der Positionierung der Halteeinheit, erreicht werden. Vorteilhaft kann dadurch eine präzise Ansteuerung eines Lagerlifts ermöglicht werden. Vorteilhaft kann eine Sicherheit, eine Zuverlässigkeit und/oder eine Genauigkeit einer automatisierten Ein- und/oder Auslagerung von Werkzeugen, insbesondere Komplettwerkzeugen, und/oder Werkzeugfuttern verbessert werden. Unter einem "Lagerlift" soll insbesondere ein Werkzeug-Lagerlift verstanden werden, welcher zumindest wechselbar bereitstellbare Halteeinheiten umfasst. Vorzugsweise umfasst der Lagerlift Schubladen oder schubladenähnliche Fächer, über die die Halteeinheiten für eine Bestückung bereitgestellt werden. Bevorzugt sind in dem Lagerlift mehrere Halteeinheiten angeordnet. Die Halteeinheiten werden von dem Werkzeug-Lagerlift zur Ein- und/oder Auslagerung von Werkzeugen, insbesondere Komplettwerkzeugen, und/oder Werkzeugfuttern in einen Übergabebereich des Werkzeug-Lagerlifts verbracht. Nach der Ein- und/oder Auslagerung werden die Halteeinheiten von dem Werkzeug-Lagerlift in eine Lagerposition innerhalb des Werkzeug-Lagerlifts verbracht, auf welche in der Regel kein einfacher Zugriff von außen möglich ist. Der Lagerlift kann beispielsweise als ein Lagerpaternoster ausgebildet sein. Die Halteeinheiten bilden insbesondere eine Art Werkzeugrechen mit einer Mehrzahl an Lagerplätzen aus. Die Lagerplätze der Halteeinheiten sind vorzugsweise (entlang einer Haupterstreckungsrichtung der Halteeinheiten) nebeneinander angeordnet. Die Halteeinheit bildet zumindest einen Teil einer Etage des Werkzeug-Lagerlifts aus. Die Halteeinheit ist zu einer Einlagerung in einen Lagerbereich des Lagerlifts vorgesehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Werkzeuge können insbesondere als Schaftwerkzeuge, vorzugsweise als Rotations-Schaftwerkzeuge, beispielsweise Bohrer, Fräser, Profilwerkzeug und/oder Reibahle ausgebildet sein. Werkzeugfutter sollen insbesondere als Bauteile verstanden werden, welche zu einer Aufnahme von Werkzeugen und einer Verbindung der Werkzeuge mit Maschinen vorgesehen sind. Insbesondere sind die Werkzeugfutter als Schnittstellen zwischen Werkzeugen und Maschinen ausgebildet. Beispielsweise kann das Werkzeugfutter als ein Schrumpfspannfutter, als ein Hydrodehnfutter, als ein Pressspannfutter, als ein Spannzangenfutter oder dergleichen, ausgebildet. Insbesondere ist die Halteeinheit zumindest für Werkzeugfutter der Größen HSK 40 bis HSK 100 und/oder für Werkzeugfutter anderer Typen wie SK, Coromant Capto^{®}, KM oder dergleichen, vorgesehen. Unter einem "Komplettwerkzeug" soll insbesondere eine Kombination von Werkzeug und Werkzeugfutter verstanden werden.

Unter einem "Handhabungsroboter" soll insbesondere ein Industrieroboter, vorzugsweise ein Gelenkarmroboter, insbesondere mit zumindest drei, vorzugsweise zumindest vier, bevorzugt zumindest fünf und besonders bevorzugt zumindest sechs unabhängig voneinander beweglichen Robotergelenken, eine Handhabungseinrichtung und/oder ein Manipulator verstanden werden. Insbesondere ist der Handhabungsroboter dazu vorgesehen, einen Materialfluss von und/oder zu zumindest einem Teil des Lagerlifts, beispielsweise den Halteeinheiten, zu bewerkstelligen. Insbesondere umfasst der Handhabungsroboter zumindest eine Greifereinheit, welche zumindest dazu vorgesehen ist, ein Werkzeug und/oder ein Werkzeugfutter zu greifen.

Vorzugsweise weist der Handhabungsroboter zumindest eine Robotersteuerungseinheit auf. Die Robotersteuereinheit weist insbesondere eine speziell programmierte Robotersteuereinrichtung auf, welche dazu vorgesehen ist, Aktionen und/oder Bewegungen des Roboters und/oder zumindest einer Teilkomponente des Handhabungsroboters zu steuern, zu regeln und/oder auszuwählen. Vorzugsweise weist die Robotersteuereinheit zumindest eine Bedienerschnittstelle auf, insbesondere zu einer Beeinflussung einer Bewegung zumindest einer Teilkomponente des Roboters und/oder einer Beeinflussung der Programmierung der Robotersteuereinrichtung.

Unter einem "Formschlusszentrierelement" soll insbesondere ein Element verstanden werden, welches dazu vorgesehen ist, mittels eines Erzeugens eines Formschlusses mit einem korrespondierenden Element, z.B. des Handhabungsroboters oder einer weiteren, einem Roboter-Modul zugeordneten automatisierten Einheit mit einer Zentriereinrichtung, eine Ausrichtung des das Formschlusszentrierelement aufweisenden Bauteils zu bewerkstelligen. Das Zentrierelement kann dabei als ein, z.B. bolzenartiger/bolzenförmiger, (Formschluss)-Vorsprung oder als eine, z.B. hülsenförmige, (Formschluss)-Ausnehmung ausgebildet sein. Der Zentrierbolzen und/oder die Zentrierausnehmung, welche mit dem Formschlusszentrierelement wechselwirken, sind getrennt von der Halteeinheit, vorzugsweise getrennt von dem Lagerlift angeordnet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter der Wendung "submillimetergenau" soll insbesondere mit einer Genauigkeitsabweichung von weniger als 1 mm, vorzugsweise von weniger als 0,5 mm, bevorzugt von weniger als 0,2 mm und besonders bevorzugt von höchstens 0,05 mm verstanden werden.

Ferner wird vorgeschlagen, dass die Halteeinheit zumindest ein weiteres Formschlusszentrierelement aufweist, welches dazu vorgesehen ist, zu einer submillimetergenauen horizontalen Ausrichtung der Halteeinheit mit einem weiteren Zentrierbolzen und/oder mit einer weiteren Zentrierausnehmung wechselzuwirken. Dadurch kann vorteilhaft eine Genauigkeit weiter erhöht werden. Vorteilhaft kann eine Schrägstellung der Halteeinheit vermieden werden. Zudem kann vorteilhaft eine Kraftwirkung auf den Zentrierbolzen / die Zentrierausnehmung beim Ausrichtvorgang reduziert werden. Insbesondere ist das weitere Formschlusszentrierelement getrennt von dem Formschlusszentrierelement angeordnet und ausgebildet. Insbesondere ist das weitere Formschlusszentrierelement etwa identisch zu dem Formschlusszentrierelement ausgebildet. Alternativ ist jedoch auch denkbar, dass das weitere Formschlusszentrierelement verschieden oder komplementär zu dem Formschlusszentrierelement ausgebildet ist. Insbesondere bleibt eine horizontale Position des Zentrierbolzens und/oder der Zentrierausnehmung bei dem Positioniervorgang zumindest im Wesentlichen unverändert. Unter "im Wesentlichen unverändert" soll insbesondere eine horizontale Positionsänderung des Zentrierbolzens und/oder der Zentrierausnehmung von weniger als 0,05 mm, vorzugsweise weniger als 0,01 mm verstanden werden.

Außerdem wird vorgeschlagen, dass das Formschlusszentrierelement und das weitere Formschlusszentrierelement in, insbesondere entlang einer Haupterstreckungsrichtung der Halteeinheit gesehen, gegenüberliegenden Endbereichen, insbesondere voneinander wegweisenden Endbereichen, der Halteeinheit angeordnet sind. Dadurch kann eine vorteilhaft genaue horizontale Positionierung der Halteeinheit ermöglicht werden. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt.

Des Weiteren wird vorgeschlagen, dass zumindest ein die Lagerplätze ausbildender Teil der Halteeinheit als ein gelasertes und/oder genietetes Blechbiegeteil ausgebildet ist. Dadurch kann vorteilhaft eine besonders hohe Präzision der Halteeinheit, insbesondere der Lagerplätze der Halteeinheit, erreicht werden. Vorteilhaft kann ein niedriges Gesamtgewicht der Halteeinheit erreicht werden. Insbesondere ist die Halteeinheit als ein kompaktes und/oder spannungsfreies Bauteil ausgebildet. Die Spannungsfreiheit kann vorteilhaft dadurch erreicht werden, dass auf ein Schweißen von Blechen o.ä. verzichtet wird und die Herstellung der Halteeinheit vollständig durch Lasern (hohe Lasergenauigkeit) und Vernieten erfolgt. Insbesondere sind bei der Halteeinheit auch die Verbindungsöffnungen für die Nieten gelasert. Dadurch kann vorteilhaft dauerhaft eine im Vergleich zu geschweißten Konstruktionen erhöhte Genauigkeit erreicht werden. Zudem können vorteilhaft dadurch, insbesondere im Vergleich zu geschweißten, geglühten und geschliffenen Varianten, Kosten reduziert werden. Insbesondere ist eine Blechaufteilung der Halteeinheit derart gewählt, dass möglichst wenige Einzelteile entstehen

Weiterhin wird vorgeschlagen, dass zumindest ein das Formschlusszentrierelement aufweisender Teil der Halteeinheit als ein, insbesondere von einem Blech verschiedenes, vorzugsweise massives, Metallelement ausgebildet ist. Dadurch kann vorteilhaft eine hohe Positioniergenauigkeit erreicht werden, insbesondere indem eine Verformbarkeit des das Formschlusszentrierelement aufweisenden Teils der Halteeinheit möglichst gering gehalten wird. Vorzugsweise ist das Metallelement als ein massiver Aluminiumblock / als ein massives Aluminiumflachmaterial ausgebildet. Alternative Materialien für das Metallelement, wie z.B. Stahl, sind selbstverständlich auch denkbar. Das Metallelement könnte zudem auch durch ein hartes Kunststoffteil, wie einen Hartplastikblock ersetzt sein.

Wenn die Halteeinheit zumindest zwei unterschiedliche Arten von Lagerplätzen ausbildet, kann vorteilhaft eine hohe Lagerflexibilität und/oder eine hohe Lagerdichte erreicht werden. Insbesondere sind die unterschiedlichen Arten von Lagerplätzen unterschiedlich geformt. Insbesondere sind die unterschiedlichen Arten von Lagerplätzen für unterschiedliche Werkzeugfutter, insbesondere unterschiedliche Komplettwerkzeuge, vorgesehen. Beispielsweise kann eine erste Art von Lagerplatz für Komplettwerkzeuge mit kurzen dicken Werkzeugen (z.B. Messerköpfe) ausgebildet sein, während eine zweite Art von Lagerplatz für Komplettwerkzeuge mit langen dünnen Werkzeugen (z.B. Bohrer oder Schaftfräser), ausgebildet ist. Selbstverständlich sind auch drei oder mehr unterschiedliche Arten von Lagerplätzen in einer einzelnen Halteeinheit denkbar.

Wenn dabei eine erste Art von Lagerplatz für eine Ein- und/oder Auslagerung von Werkzeugen, insbesondere Komplettwerkzeugen, und/oder Werkzeugfuttern aus einer zumindest teilweise vertikalen Ein- und/oder Auslagerrichtung ausgebildet ist, kann vorteilhaft eine einfache Einlagerung/Auslagerung der kurzen, dicken Werkzeuge ermöglicht werden. Wenn dabei eine zweite Art von Lagerplatz für eine Ein- und/oder Auslagerung von Werkzeugen, insbesondere Komplettwerkzeugen, und/oder Werkzeugfuttern aus einer (ausschließlich oder nahezu ausschließlich) horizontalen Ein- und/oder Auslagerrichtung ausgebildet ist, kann vorteilhaft eine einfache Einlagerung/Auslagerung der langen dünnen Werkzeuge ermöglicht werden.

Zusätzlich wird vorgeschlagen, dass zumindest einer der Lagerplätze ein (Dreh-)Lagefixierungselement für Werkzeugfutter aufweist. Dadurch kann vorteilhaft eine hohe Präzision der Einlagerung erreicht werden. Das (Dreh-)Lagefixierungselement kann beispielsweise als ein Vorsprung oder als eine Ausnehmung ausgebildet sein, welche/r dazu vorgesehen ist, mit einer Ausnehmung oder einem Vorsprung des Werkzeugfutters zusammenzuwirken / ineinander einzugreifen.

Außerdem wird vorgeschlagen, dass die Präzisions-Ein- und/oder Auslagervorrichtung eine ebene Unterlageplatte, welche die Halteeinheit horizontalverschieblich trägt, aufweist. Dadurch kann vorteilhaft ein Positionierungsvorgang vereinfacht werden. Insbesondere liegt zumindest ein Teil der Halteeinheit (direkt) auf einer Oberfläche der Unterlageplatte auf. Insbesondere ist ein Reibungskoeffzient zwischen Unterlageplatte und Halteeinheit derart gewählt, dass eine durch die Zentriereinrichtung erzeugte/erzeugbare Kraft ausreichend ist für eine Verschiebung der Halteeinheit (auch im befüllten Zustand) relativ zu der Oberfläche der Unterlageplatte. Insbesondere liegen auch die Metallelemente mit den Formschlusszentrierelementen auf der Unterlageplatte auf.

Wenn die Halteeinheit schwimmend auf der Unterlageplatte gelagert ist, können vorteilhafte Lagereigenschaften, insbesondere hinsichtlich der Horizontalverschieblichkeit der Halteeinheit auf der Unterlageplatte erreicht werden. Außerdem können Kosten und Herstellungsaufwand gering gehalten werden. Insbesondere sind auch die Metallelemente mit den Formschlusszentrierelementen schwimmend auf der Unterlageplatte gelagert.

Wenn die Unterlageplatte aus einem Kunststoff, insbesondere aus einem Polyvinylchlorid (PVC), ausgebildet ist, können vorteilhaft gute Gleiteigenschaften zwischen Halteeinheit und Unterlageplatte erreicht werden. Vorteilhaft kann dadurch die Halteeinheit bei dem Zentriervorgang leicht verrückt werden. Insbesondere gleitet Metall besser auf PVC als auf Metall.

Ferner wird ein Präzisions-Ein- und/oder Auslagersystem mit dem Lagerlift, welcher eine Mehrzahl an jeweils eine Halteeinheit umfassenden Präzisions-Ein-und/oder Auslagervorrichtungen aufweist, mit dem Handhabungsroboter zur Bestückung des Lagerlifts mit Werkzeugen, insbesondere mit Komplettwerkzeugen, und/oder Werkzeugfuttern und mit zumindest einer, einen automatisiert bewegbaren Zentrierbolzen und/oder eine automatisiert bewegbare Zentrierausnehmung aufweisenden Zentriereinrichtung zur submillimetergenauen horizontalen Ausrichtung von Halteeinheiten mittels eines Erzeugens eines Formschlusses des Zentrierbolzens und/oder der Zentrierausnehmung mit zumindest einem Formschlusszentrierelement der Halteeinheiten, vorgeschlagen. Dadurch kann vorteilhaft eine hohe Präzision, insbesondere der Positionierung der Halteeinheit, erreicht werden. Vorteilhaft kann dadurch eine präzise automatisierte Ansteuerung des Lagerlifts zur Einlagerung und/oder Auslagerung von Werkzeugen, insbesondere Komplettwerkzeugen, und/oder Werkzeugfuttern, ermöglicht werden.

Wenn der Zentrierbolzen der Zentriereinrichtung eine konische Außenform aufweist und/oder dass die Zentrierausnehmung der Zentriereinrichtung eine konische Innenform aufweist, kann vorteilhaft eine spielfreie Zentrierung erreicht werden. Vorteilhaft kann eine besonders hohe Positionierungspräzision der Halteeinheit relativ zu dem Handhabungsroboter erreicht werden. Insbesondere verjüngt sich ein Außendurchmesser der konischen Außenform des Zentrierbolzens in eine auf das Formschlusszentrierelement hinweisende Richtung. Insbesondere verjüngt sich ein Innendurchmesser der konischen Innenform der Zentrierausnehmung in eine von dem Formschlusszentrierelement wegweisende Richtung. Alternativ ist auch denkbar, dass das Formschlusszentrierelement eine konische Innen- oder Außenform aufweist. Insbesondere ist die konische Innenform / die konische Außenform zu einer Erzeugung einer spielfreien Selbstzentrierung der Halteeinheit vorgesehen.

Zusätzlich wird vorgeschlagen, dass der Zentrierbolzen der Zentriereinrichtung und/oder die Zentrierausnehmung der Zentriereinrichtung automatisiert entlang einer, insbesondere relativ zu der Oberfläche der Unterlageplatte, auf der die Halteeinheit aufliegt, gesehenen, Vertikalrichtung bewegbar ist. Dadurch kann vorteilhaft eine präzise (automatisierte) Zentrierung der Halteeinheit relativ zu dem Handhabungsroboter erreicht werden. Insbesondere wird der Zentrierbolzen der Zentriereinrichtung und/oder die Zentrierausnehmung der Zentriereinrichtung bei dem Zentriervorgang automatisiert und ausschließlich entlang der Vertikalrichtung bewegt.

Außerdem wird vorgeschlagen, dass das Präzisions-Ein- und/oder Auslagersystem eine weitere Zentriereinrichtung mit einem weiteren Zentrierbolzen und/oder mit einer weiteren Zentrierausnehmung, welcher/welche zu einem mit dem Zentrierbolzen der Zentriereinrichtung und/oder mit der Zentrierausnehmung der Zentriereinrichtung synchronisierten Formschluss-Wechselwirkung mit dem weiteren Formschlusszentrierelement derselben Halteeinheit (z.B. zu einem Einbringen eines Zentrierbolzens in das Formschlusszentrierelement oder zu einem Stülpen einer Zentrierausnehmung über das Formschlusszentrierelement) vorgesehen ist, aufweist. Dadurch kann vorteilhaft eine besonders hohe Präzision der, insbesondere gesamten, Halteeinheit erreicht werden. Insbesondere ist die Zentriereinrichtung zumindest im Wesentlichen identisch zu der weiteren Zentriereinrichtung ausgebildet.

Zudem wird vorgeschlagen, dass der Lagerlift dazu vorgesehen ist, wahlweise jeweils eine der mehreren in dem Lagerlift umfassten Präzisions-Ein- und/oder Auslagervorrichtungen / Halteeinheiten für einen Zugriff des Handhabungsroboters bereitzustellen. Dadurch kann vorteilhaft eine hohe Lagerkapazität erreicht werden. Insbesondere weist das Präzisions-Ein- und/oder Auslagersystem einen Übergabebereich auf, in welchen jede der mehreren Halteeinheiten wahlweise zur Ein- und/oder Auslagerung von Komplettwerkzeugen oder Werkzeugfuttern, insbesondere automatisiert durch eine Halteeinheiten-Bereitstellungseinrichtung des Lagerlifts, verbringbar ist.

Wenn der Lagerlift zumindest eine Übergabefläche und/oder eine Schublade aufweist, welche zumindest während einer Ein- und/oder Auslagerung von Werkzeugen, insbesondere von Komplettwerkzeugen, und/oder Werkzeugfuttern in und/oder aus dem Lagerlift, die Halteeinheit einer der mehreren in dem Lagerlift umfassten Präzisions-Ein- und/oder Auslagervorrichtungen trägt, kann vorteilhaft ein einfacher Zugriff auf die Komplettwerkzeuge oder Werkzeugfutter durch handelsübliche Handhabungsroboter gewährleistet werden.

Wenn außerdem zumindest der Lagerlift und die Zentriereinrichtung, und vorzugsweise der Handhabungsroboter, zumindest in dem Übergabebereich des Präzisions-Ein- und/oder Auslagersystems fest auf einer gemeinsamen Unterlage und/oder an einem Boden fixiert (z.B. festgeschraubt, verklebt, festbetoniert, verschweißt, etc.) sind, kann vorteilhaft eine besonders hohe Präzision erreicht werden. Insbesondere umfasst der Übergabebereich zumindest die Übergabefläche und/oder die Schublade in einem für die Ein- und/oder Auslagerung vorgesehenen (ausgefahrenen) Betriebszustand.

Des Weiteren wird vorgeschlagen, dass das Präzisions-Ein- und/oder Auslagersystem eine, insbesondere der Zentriereinrichtung zugeordnete, Halteeinheiten-Erkennungsvorrichtung, welche zu einer Identifizierung einzelner Halteeinheiten des Lagerlifts vorgesehen ist, aufweist. Dadurch kann vorteilhaft eine gute Lagerorganisation erreicht werden. Insbesondere ist die Halteeinheiten-Erkennungsvorrichtung zumindest teilweise einstückig mit der Zentriereinrichtung ausgebildet / an der Zentriereinrichtung montiert. Dadurch kann vorteilhaft eine Komplexität reduziert werden. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Insbesondere ist die Halteeinheiten-Erkennungsvorrichtung als ein RFID-Lesegerät ausgebildet. Alternative Ausgestaltungen der Halteeinheiten-Erkennungsvorrichtung, wie z.B. als Barcode-Lesegerät, als 2d-Code-Lesegerät, als NFC-Lesegerät, etc., sind jedoch auch denkbar. Insbesondere weist jede der Halteeinheiten des Lagerlifts ein eineindeutiges Identifikatorelement, z.B. einen RFID-Chip, einen 2D-Code, einen Barcode, etc., auf, welches durch die Halteeinheiten-Erkennungsvorrichtung auslesbar ist.

Ferner wird ein Verfahren zu einem zumindest teilautomatisierten Präzisions-Ein-und/oder Auslagern von Werkzeugen, insbesondere Komplettwerkzeugen, und/oder Werkzeugfuttern in und/oder aus dem Lagerlift, insbesondere mittels des Präzisions-Ein- und/oder Auslagersystems vorgeschlagen, mit einem horizontalen Detail-Positionierschritt, in welchem eine submillimetergenaue Ausrichtung einer, insbesondere zuvor aus dem Lagerlift herausbewegten, Halteeinheit dem Lagerlift relativ zu einem Handhabungsroboter des Präzisions-Ein- und/oder Auslagersystems mittels eines Erzeugens eines Formschlusses eines Zentrierbolzens, vorzugsweise zumindest zweier Zentrierbolzen, und/oder einer Zentrierausnehmung, vorzugsweise zumindest zweier Zentrierausnehmungen, mit einem Formschlusszentrierelement, vorzugsweise mit jeweils einem Formschlusszentrierelement, der horizontalbeweglich gelagerten Halteeinheit vorgenommen wird. Dadurch kann vorteilhaft eine hohe Präzision, insbesondere der Positionierung der Halteeinheit, erreicht werden. Vorteilhaft kann dadurch eine präzise Ansteuerung eines Lagerlifts ermöglicht werden.

Wenn in dem Verfahren außerdem vor, während und/oder nach dem Positionierschritt eine eindeutige automatisierte Identifizierung der jeweiligen Halteeinheit vorgenommen wird, kann vorteilhaft eine besonders gute, sichere und/oder fehlerunanfällige (automatisierte) Lagerorganisation erreicht werden.

Die erfindungsgemäße Präzisions-Ein- und/oder Auslagervorrichtung, das erfindungsgemäße Präzisions-Ein- und/oder Auslagersystem und das erfindungsgemäße Verfahren sollen hierbei nicht auf die oben beschriebene Anwendung und Ausführungsform beschränkt sein. Insbesondere kann die erfindungsgemäße Präzisions-Ein- und/oder Auslagervorrichtung, das erfindungsgemäße Präzisions-Ein- und/oder Auslagersystem und das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Darstellung eines Präzisions-Ein- und/oder Auslagersystems für Komplettwerkzeuge mit einer eine Halteeinheit für die Komplettwerkzeuge umfassenden Präzisions-Ein- und/oder Auslagervorrichtung, mit einem Lagerlift und mit einem Handhabungsroboter,
- Fig. 2: eine schematische perspektivische Darstellung der Halteeinheit,
- Fig. 3: eine schematische perspektivische Darstellung eines Details der Halteeinheit,
- Fig. 4: eine schematische perspektivische Darstellung eines Übergabebereichs des Präzisions-Ein- und/oder Auslagersystems mit der Präzisions-Ein- und/oder Auslagervorrichtung auf einer ausgefahrenen Übergabefläche des Lagerlifts,
- Fig. 5: eine schematische perspektivische Darstellung des Übergabebereichs des Präzisions-Ein- und/oder Auslagersystems mit einer eingefahrenen Übergabefläche des Lagerlifts und
- Fig. 6: ein schematisches Ablaufdiagramm eines Verfahrens zu einem zumindest teilautomatisierten Präzisions-Ein- und/oder Auslagern von Komplettwerkzeugen.

### Beschreibung des Ausführungsbeispiels

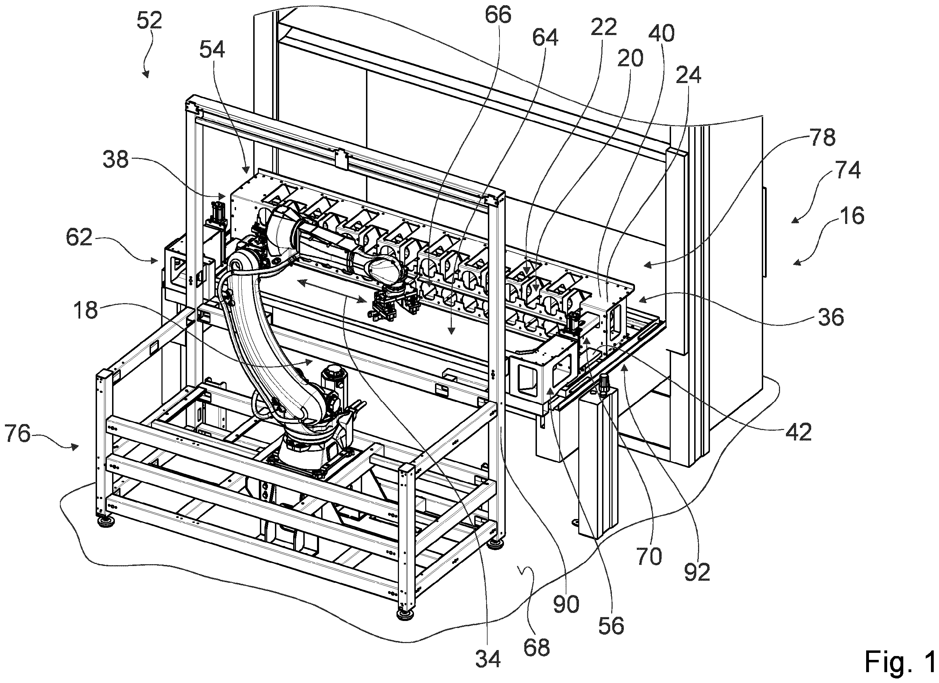

Fig. 1 zeigt ein Präzisions-Ein- und/oder Auslagersystem 52. Das Präzisions-Ein-und/oder Auslagersystem 52 weist einen Lagerlift 16 auf. Der Lagerlift 16 ist als ein Komplettwerkzeug-Lagerlift ausgebildet. Der Lagerlift 16 ist zu einem Aufbewahren von Werkzeugen 10, Komplettwerkzeugen 12 und/oder Werkzeugfuttern 14 vorgesehen. Das Präzisions-Ein- und/oder Auslagersystem 52 weist einen Handhabungsroboter 18 auf. Der Handhabungsroboter 18 ist zu einer Bestückung des Lagerlifts 16 mit Werkzeugen 10, Komplettwerkzeugen 12 und/oder Werkzeugfuttern 14 vorgesehen. Das Präzisions-Ein- und/oder Auslagersystem 52 umfasst ein Lagermodul 74. Der Lagerlift 16 ist dem Lagermodul 74 des Präzisions-Ein- und/oder Auslagersystems 52 zugeordnet.

Das Präzisions-Ein- und/oder Auslagersystem 52 umfasst ein Roboter-Modul 76. Der Handhabungsroboter 18 ist dem Roboter-Modul 76 zugeordnet. Das Lagermodul 74 und das Roboter-Modul 76 bilden vollständig voneinander separierte und/oder separierbare Teileinheiten des Präzisions-Ein- und/oder Auslagersystems 52 aus.

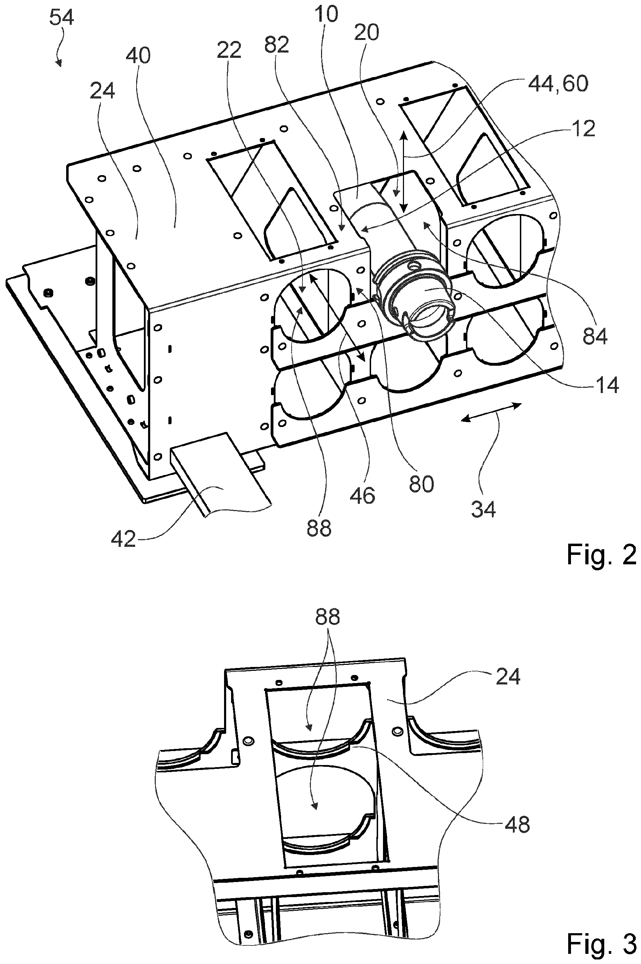

Das Präzisions-Ein- und/oder Auslagersystem 52 weist eine Mehrzahl an Präzisions-Ein- und/oder Auslagervorrichtungen 54 auf. Der Lagerlift 16 weist eine Mehrzahl (z.B. zehn oder mehr) an Halteeinheiten 24 auf. Die Präzisions-Ein-und/oder Auslagervorrichtungen 54 sind zu einem Einlagern und/oder Auslagern von Werkzeugen 10, Komplettwerkzeugen 12 und/oder Werkzeugfuttern 14 in und/oder aus dem Lagerlift 16 vorgesehen. Jede Präzisions-Ein- und/oder Auslagervorrichtung 54 weist eine Halteeinheit 24 auf. Die Halteeinheit 24 ist zu einer Halterung und/oder Aufnahme der Werkzeuge 10, Komplettwerkzeuge 12 und/oder Werkzeugfutter 14 vorgesehen. Die Halteeinheit 24 bildet einen Werkzeugrechen zur Aufnahme und Halterung der Werkzeuge 10, Komplettwerkzeuge 12 und/oder Werkzeugfutter 14 aus. Die Halteeinheit 24 umfasst eine Mehrzahl an Lagerplätzen 20, 22 (siehe auch Fig. 2). Die Lagerplätze 20, 22 sind durch den Handhabungsroboter 18 bestückbar. Ein die Lagerplätze 20, 22 ausbildender Teil 40 der Halteeinheit 24 ist als ein gelasertes und/oder genietetes Blechbiegeteil ausgebildet. Der die Lagerplätze 20, 22 ausbildende Teil 40 der Halteeinheit 24, vorzugsweise die gesamte Halteeinheit 24 ist frei von Schweißungen (Schweißnähten) oder dergleichen hergestellt.

Die Halteeinheiten 24 bilden jeweils zwei unterschiedliche Arten von Lagerplätzen 20, 22 aus. Eine erste Art von Lagerplatz 20 der Halteeinheit 24 ist für eine Ein-und/oder Auslagerung von Komplettwerkzeugen 12 aus einer zumindest teilweise vertikalen Ein- und/oder Auslagerrichtung 44 ausgebildet. Die Lagerplätze 20 dieses Typs weisen eine durchgehende Aufnahmeöffnung 84 auf, welche sich über einen Teil einer Vorderseite 80 der Halteeinheit 24 und zugleich über einen Teil einer Oberseite 82 der Halteeinheit 24 erstreckt. An der Oberseite 82 ist die Aufnahmeöffnung 84 größer als ein Maximaldurchmesser des Werkzeugfutters 14 des Komplettwerkzeugs 12, für das der Lagerplatz 20 vorgesehen ist. Dadurch kann vorteilhaft ein Komplettwerkzeug 12, dessen Werkzeug 10 einen größeren maximalen Durchmesser aufweist als das Werkzeugfutter 14 des Komplettwerkzeugs 12, in die Halteeinheit 24 eingebracht werden. Eine zweite Art von Lagerplatz 22 der Halteeinheit 24 ist für eine Ein- und/oder Auslagerung von Komplettwerkzeugen 12 aus einer nahezu rein horizontalen Ein- und/oder Auslagerrichtung 46 ausgebildet. Die Lagerplätze 22 dieses Typs weisen eine Aufnahmeöffnung 88 auf, welche vollständig auf der Vorderseite 80 der Halteeinheit 24 angeordnet ist. Die Halteeinheit 24 weist zudem weitere Ausnehmungen auf, welche nicht für eine Ein- und/oder Auslagerung von Werkzeugen 10, Komplettwerkzeugen 12 und/oder Werkzeugfuttern 14 vorgesehen sind, sondern zur Reduzierung des Gesamtgewichts der Halteeinheit 24 dienen sollen. Jeder Lagerplatz 20, 22 weist zudem ein (Dreh-)Lagefixierungselement 48 für Werkzeugfutter 14 auf (siehe Fig. 3). Das eine (Dreh-)Lagefixierungselement 48 ist im in der Fig. 3 dargestellten Fall als Vorsprung ausgebildet, welcher dazu vorgesehen ist, mit einem komplementären Element (nicht dargestellt) des Werkzeugfutters 14 ineinanderzugreifen und somit eine Rotationslage des Werkzeugfutters 14 in dem Lagerplatz 20, 22 festzulegen / zu fixieren. Eine Öffnungsform und/oder Öffnungsgröße der Aufnahmeöffnungen 84, 88, insbesondere im Bereich der Vorderseite 80 der Halteeinheit 24, ist auf jeweils einzulagernde Werkzeugfutter 14 von Komplettwerkzeugen 12 abgestimmt. Im in den Figuren dargestellten Fall sind die Aufnahmeöffnungen 84, 88 für die Aufnahme von Komplettwerkzeugen 12 mit HSK-100 Werkzeugfuttern 14 ausgestaltet. Die in der Fig. 2 beispielhaft dargestellte Halteeinheit 24 weist zwei Etagen auf. In einer unteren Etage sind nur Lagerplätze 22 der zweiten Art umfasst, während eine obere Etage Lagerplätze 20 der ersten Art und Lagerplätze 22 der zweiten Art umfasst.

Der Lagerlift 16 umfasst einen Lagerraum 78. Der Lagerraum 78 ist zumindest zu einer Aufnahme von Halteeinheiten 24 vorgesehen. Die Halteeinheit 24 ist von dem Lagerlift 16 in den Lagerraum 78 verbringbar. Der Lagerraum 78 des Lagerlifts 16 umfasst mehrere Etagen (nicht dargestellt), welche jeweils für die Aufnahme von einer oder mehreren Halteeinheiten 24 vorgesehen sind.

Der Lagerlift 16 ist dazu vorgesehen, wahlweise jeweils eine der mehreren in dem Lagerlift 16 umfassten Präzisions-Ein- und/oder Auslagervorrichtungen 54 / Halteeinheiten 24 für einen Zugriff des Handhabungsroboters 18 bereitzustellen. Das Präzisions-Ein- und/oder Auslagersystem 52 bildet einen Übergabebereich 66 aus. Der Lagerlift 16 weist zumindest eine Übergabefläche 64 und/oder eine Schublade auf. Die Übergabefläche 64 ist in dem Übergabebereich 66 des Präzisions-Ein- und/oder Auslagersystems 52 angeordnet. Im Fall einer Ausbildung als Schublade ist die Schublade durch ein Ausfahren in den Übergabebereich 66 des Präzisions-Ein- und/oder Auslagersystems 52 verbringbar. Die Übergabefläche 64 oder die Schublade trägt zumindest während einer Ein- und/oder Auslagerung von Werkzeugen 10, Komplettwerkzeugen 12 und/oder Werkzeugfuttern 14 in und/oder aus dem Lagerlift 16, eine der in dem Lagerlift 16 aufgenommenen Halteeinheiten 24. Der Lagerlift 16 umfasst ein Schienensystem 92, entlang welchem die Übergabefläche 64 wie eine Schublade aus- und eingefahren werden kann.

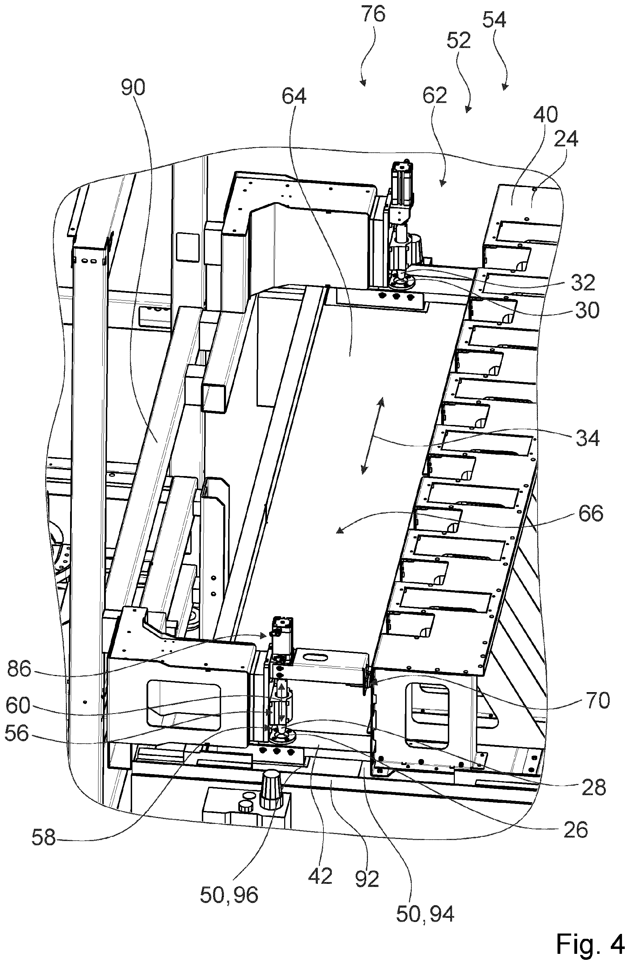

Das Präzisions-Ein- und/oder Auslagersystem 52 weist eine Zentriereinrichtung 56 auf (siehe auch Fig. 4). Die Zentriereinrichtung 56 ist zu einer submillimetergenauen horizontalen Ausrichtung der Halteeinheiten 24 relativ zu dem Handhabungsroboter 18 vorgesehen. Die Zentriereinrichtung 56 ist dem Roboter-Modul 76 zugeordnet. Die Zentriereinrichtung 56 umfasst einen Zentrierbolzen 28. Alternativ könnte die Zentriereinrichtung 56 auch eine Zentrierausnehmung aufweisen (nicht dargestellt). Der Zentrierbolzen 28 ist automatisiert bewegbar. Der Zentrierbolzen 28 ist entlang einer Vertikalrichtung 60 automatisiert bewegbar. Die Zentriereinrichtung 56 umfasst eine Antriebseinheit 86, welche dazu vorgesehen ist, die Bewegung des Zentrierbolzens 28 entlang der Vertikalrichtung 60 hydraulisch oder pneumatisch zu erzeugen. Die Zentriereinrichtung 56 ist an eine Rahmeneinheit 90 des Roboter-Moduls 76 montiert. Die Rahmeneinheit 90 umgibt den Handhabungsroboter 18 zumindest teilweise. Der Zentrierbolzen 28 der Zentriereinrichtung 56 weist eine konische Außenform 58 auf. Alternativ ist bei einer Ausgestaltung als Zentrierausnehmung eine konische Innenform denkbar. Die Zentriereinrichtung 56 ist getrennt von dem Handhabungsroboter 18 ausgebildet. Die Zentriereinrichtung 56 ist getrennt von dem Lagerlift 16 ausgebildet. Die Halteeinheiten 24 weisen jeweils ein Formschlusszentrierelement 26 auf. Das Formschlusszentrierelement 26 ist komplementär zu dem Zentrierelement (Zentrierbolzen 28 / Zentrierausnehmung) der Zentriereinrichtung 56 ausgebildet. Das Formschlusszentrierelement 26 weist eine konische Innenform (bei einer hülsenförmigen Ausbildung) oder eine konische Außenform 58 (bei einer bolzenförmigen Ausbildung) auf. Das Formschlusszentrierelement 26 ermöglicht durch die (an die Form des Zentrierbolzens 28 oder der Zentrierausnehmung angepasste) konische Form eine spielfreie Selbstzentrierung der Halteeinheit 24 relativ zu dem Roboter-Modul 76. Der Zentrierbolzen 28 ist dazu vorgesehen, die submillimetergenaue horizontale Ausrichtung der Halteeinheiten 24 mittels eines Erzeugens eines Formschlusses mit dem Formschlusszentrierelement 26 zu erzeugen. Durch das vertikale Einbringen des Zentrierbolzens 28 in das als Ausnehmung ausgebildete Formschlusszentrierelement 26 wird die das Formschlusszentrierelement 26 aufweisende Halteeinheit 24 horizontal verschoben, bis der Zentrierbolzen 28 exakt in das Formschlusszentrierelement 26 passt. Der Zentrierbolzen 28 bleibt dabei horizontal unbewegt. Ein das Formschlusszentrierelement 26 aufweisender Teil 42 der Halteeinheit 24 ist als ein von einem Blech verschiedenes massives Metallelement ausgebildet. Der das Formschlusszentrierelement 26 aufweisende Teil 42 der Halteeinheit 24 ist somit kein Teil des gelaserten und genieteten Blechbiegeteils. Der das Formschlusszentrierelement 26 aufweisende Teil 42 der Halteeinheit 24 ist mit dem Blechbiegeteil verbunden. Der das Formschlusszentrierelement 26 aufweisende Teil 42 der Halteeinheit 24 ist in einer Öffnung des Blechbiegeteils montiert und darin fixiert. Der das Formschlusszentrierelement 26 aufweisende Teil 42 der Halteeinheit 24 ragt auf der Vorderseite 80 über den als Blechbiegeteil ausgebildeten Teil 40 der Halteeinheit 24 hervor. Der das Formschlusszentrierelement 26 aufweisende Teil 42 der Halteeinheit 24 ragt in Richtung des Roboter-Moduls 76 und/oder der Zentriereinrichtung 56 über den als Blechbiegeteil ausgebildeten Teil 40 der Halteeinheit 24 hervor.

Die Halteeinheit 24 weist ein weiteres Formschlusszentrierelement 30 auf. Das weitere Formschlusszentrierelement 30 ist ebenfalls zu einer horizontalen Ausrichtung der Halteeinheit 24 über eine Wechselwirkung mit einem weiteren Zentrierbolzen 32 (alternativ: Zentrierausnehmung) vorgesehen. Die submillimetergenaue Ausrichtung der gesamten Halteeinheit 24 ist insbesondere durch die Kombination beider Formschlusszentrierelemente 26, 30 erreichbar. Das Formschlusszentrierelement 26 und das weitere Formschlusszentrierelement 30 sind in entlang einer Haupterstreckungsrichtung 34 der Halteeinheit 24 gesehen voneinander wegweisend gegenüberliegenden Endbereichen 36, 38 der Halteeinheit 24 angeordnet. Das weitere Formschlusszentrierelement 30 ist in einem weiteren massiven und von dem Blechbiegeteil verschiedenen Metallelement angeordnet. Das Präzisions-Ein- und/oder Auslagersystem 52 weist eine weitere Zentriereinrichtung 62 mit dem weiteren Zentrierbolzen 32 (alternativ mit einer weiteren Zentrierausnehmung) auf. Der weitere Zentrierbolzen 32 der weiteren Zentriereinrichtung 62 ist zu einer mit dem Zentrierbolzen 28 der Zentriereinrichtung 56 synchronisierten Formschluss-Wechselwirkung mit dem weiteren Formschlusszentrierelement 30 derselben Halteeinheit 24 vorgesehen.

Die Präzisions-Ein- und/oder Auslagervorrichtung 54 weist eine ebene Unterlageplatte 50 auf. Die Unterlageplatte 50 trägt die jeweils von dem Lagerlift 16 zur Ein- und/oder Auslagerung bereitgestellte Halteeinheit 24 horizontalverschieblich. Die Halteeinheiten 24 sind auf einer Oberfläche der Unterlageplatte 50 horizontal verschieblich gelagert. Die Unterlageplatte 50 ist in dem Übergabebereich 66 angeordnet. Die Unterlageplatte 50 ist auf die Übergabefläche 64 oder die Schublade aufgelegt und vorzugsweise auf der Übergabefläche 64 oder auf der Schublade fixiert. Es ist denkbar, dass die Unterlageplatte 50 in mehrere einzelne Teilplatten 94, 96 aufgeteilt ist, welche jeweils eine Kontaktfläche zur Auflage von Teilen der Halteeinheit 24 ausbilden.

Die Halteeinheit 24 ist schwimmend auf der Unterlageplatte 50 oder den mehreren die Unterlageplatte 50 zusammen ausbildenden Teilplatten 94, 96 gelagert. Die Unterlageplatte 50 ist aus einem Kunststoff ausgebildet. Die Unterlageplatte 50 ist aus einem Polyvinylchlorid ausgebildet. Im beispielhaft dargestellten Fall der Fig. 4 liegt die Halteeinheit 24 auf einer ersten Teilplatte 94 der Unterlageplatte 50 auf, während die Metallelemente der Halteeinheit 24 auf einer zweiten Teilplatte 96 der Unterlageplatte 50 aufliegen, welche getrennt von der ersten Teilplatte 94 der Unterlageplatte 50 ausgebildet ist.

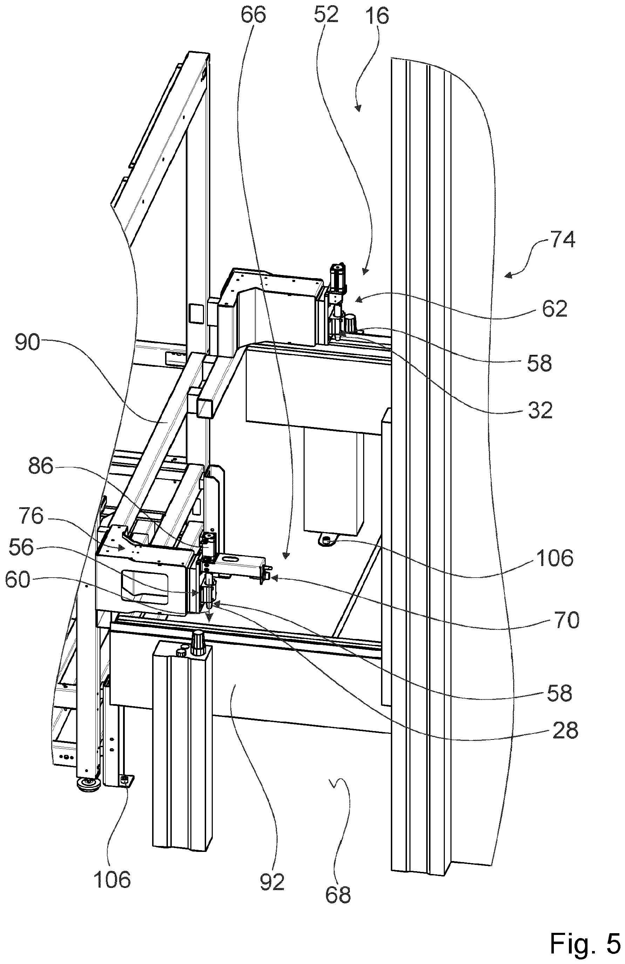

Die Fig. 5 zeigt eine schematische perspektivische Ansicht des Übergabebereichs 66 des Präzisions-Ein- und/oder Auslagersystems 52, wobei die durch eine Schublade gebildete Übergabefläche 64 aktuell in den Lagerraum 78 des Lagerlifts 16 eingefahren ist. Der Lagerlift 16 und die Zentriereinrichtung(en) 56, 62 sind zumindest in dem Übergabebereich 66 zumindest indirekt fest am Boden 68 fixiert. Der Lagerlift 16 und der Handhabungsroboter 18 sind zumindest in dem Übergabebereich 66 fest am Boden 68 fixiert. Das Lagermodul 74 und das Roboter-Modul 76 sind zumindest in dem Übergabebereich 66 fest am Boden 68 fixiert. Das Lagermodul 74 und das Roboter-Modul 76 sind zumindest in dem Übergabebereich 66 über Bodenverankerungen 106 fest mit dem Boden 68 verschraubt. Im in der Fig. 5 dargestellten Fall sind das Lagermodul 74 und das Roboter-Modul 76 am Boden 68 festgeschraubt. Alternativ ist auch eine Fixierung von Lagerlift 16, Zentriereinrichtung(en) 56, 62 und Handhabungsroboter 18 und/oder von Lagermodul 74 und Roboter-Modul 76 an einem gemeinsamen, vorzugsweise vergleichsweise schweren, Basiselement, wie z.B. einen Betonklotz oder einer dicken Stahlplatte denkbar.

Das Präzisions-Ein- und/oder Auslagersystem 52 weist eine Halteeinheiten-Erkennungsvorrichtung 70 auf. Die Halteeinheiten-Erkennungsvorrichtung 70 ist einer der Zentriereinrichtungen 56, 62 zugeordnet. Das Präzisions-Ein- und/oder Auslagersystem 52 weist Identifikatorelemente (nicht dargestellt) auf, welche jeweils einer der Halteeinheiten 24 zugeordnet sind. Die Identifikatorelemente sind jeweils an oder in den Halteeinheiten 24 befestigt. Die Halteeinheiten-Erkennungsvorrichtung 70 ist zu einer Identifizierung der einzelnen Halteeinheiten 24 des Lagerlifts 16 vorgesehen. Die Halteeinheiten-Erkennungsvorrichtung 70 ist zu einer Identifizierung der einzelnen Halteeinheiten 24 des Lagerlifts 16 während des Einlagervorgangs und/oder während des Auslagervorgangs vorgesehen.

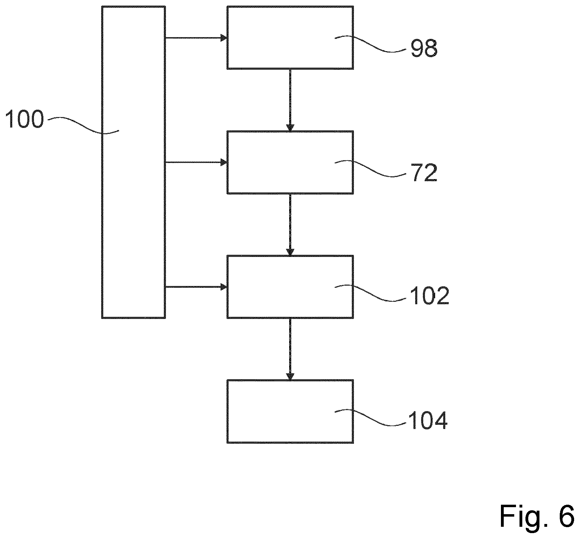

Die Fig. 6 zeigt ein schematisches Ablaufdiagramm eines Verfahrens zu einem zumindest teilautomatisierten Präzisions-Ein- und/oder Auslagern von Werkzeugen 10, Komplettwerkzeugen 12 und/oder Werkzeugfuttern 14 in und/oder aus dem Lagerlift 16 mittels des Präzisions-Ein- und/oder Auslagersystems 52. In zumindest einem ersten Verfahrensschritt 98 wird eine Halteeinheit 24 durch den Lagerlift 16 in den Übergabebereich 66 verbracht. Dabei wird die Halteeinheit 24 auf die auf der Übergabefläche 64 aufliegende Unterlageplatte 50 positioniert und mittels einer schubladenähnlichen Funktion aus dem Lagerraum 78 des Lagerlifts 16 ausgefahren. In zumindest einem daran anschließenden horizontalen Detail-Positionierschritt 72 wird eine submillimetergenaue Ausrichtung der zuvor aus dem Lagerlift 16 herausbewegten Halteeinheit 24 relativ zu dem Handhabungsroboter 18 des Präzisions-Ein-und/oder Auslagersystems 52 vorgenommen. In dem Detail-Positionierschritt 72 wird dazu mittels eines Erzeugens eines Formschlusses des Zentrierbolzens 28, der beiden Zentrierbolzen 28, 32 (oder alternativ einer oder mehrerer Zentrierausnehmungen) mit dem Formschlusszentrierelement 26, vorzugsweise mit jeweils einem der Formschlusszentrierelemente 26, 30, eine Horizontalverschiebung der Halteeinheit 24 relativ zu dem Handhabungsroboter 18 erzeugt. Durch das Einschieben der konisch geformten Zentrierbolzen 28, 32 von oben in die Formschlusszentrierelemente 26, 30 wird die Halteeinheit 24 automatisch in die gewünschte Position gezogen / geschoben. Die Relativposition zwischen Handhabungsroboter 18 und Zentriereinrichtung(en) 56, 62 insbesondere den Zentrierbolzen 28, 32, sind fix und vorzugsweise einer Robotersteuerung des Handhabungsroboters 18 bekannt. In einem weiteren, vor, während und/oder nach dem Detail-Positionierschritt 72 stattfindenden Verfahrensschritt 100 wird eine eindeutige automatisierte Identifizierung der jeweiligen Halteeinheit 24 durch die Halteeinheiten-Erkennungsvorrichtung 70 vorgenommen. Dadurch kann die Lagerposition des aktuell eingelagerten Komplettwerkzeugs 12 in dem Lagerlift 16 oder die Positionen, Anzahlen, etc. von Freiplätzen in dem Lagerlift 16 in einem Computersystem, z.B. des Lagerlifts 16, des Roboter-Moduls 76 oder eines anderen Teils einer Industrieanlage, registriert werden. In zumindest einem weiteren Verfahrensschritt 102 wird ein Komplettwerkzeug 12 durch den Handhabungsroboter 18 in einen der Lagerplätze 20, 22 der bereitstehenden Halteeinheit 24 eingelagert oder aus einem der Lagerplätze 20, 22 der bereitstehenden Halteeinheit 24 ausgelagert. In zumindest einem weiteren Verfahrensschritt 104 wird die Halteeinheit 24 wieder in den Lagerraum 78 verbracht und ggf. eine weitere Halteeinheit (nicht dargestellt) in den Übergabebereich 66 verbracht.

### Bezugszeichen

- 10: Werkzeug
- 12: Komplettwerkzeug
- 14: Werkzeugfutter
- 16: Lagerlift
- 18: Handhabungsroboter
- 20: Lagerplatz
- 22: Lagerplatz
- 24: Halteeinheit
- 26: Formschlusszentrierelement
- 28: Zentrierbolzen
- 30: Weiteres Formschlusszentrierelement
- 32: Weiterer Zentrierbolzen
- 34: Haupterstreckungsrichtung
- 36: Endbereich
- 38: Endbereich
- 40: Teil
- 42: Teil
- 44: vertikale Ein- und/oder Auslagerrichtung
- 46: horizontale Ein- und/oder Auslagerrichtung
- 48: (Dreh-)Lagefixierungselement
- 50: Unterlageplatte
- 52: Präzisions-Ein- und/oder Auslagersystem
- 54: Präzisions-Ein- und/oder Auslagervorrichtung
- 56: Zentriereinrichtung
- 58: Konische Außenform
- 60: Vertikalrichtung
- 62: Weitere Zentriereinrichtung
- 64: Übergabefläche
- 66: Übergabebereich
- 68: Boden
- 70: Halteeinheiten-Erkennungsvorrichtung
- 72: Detail-Positionierschritt
- 74: Lagermodul
- 76: Roboter-Modul
- 78: Lagerraum
- 80: Vorderseite
- 82: Oberseite
- 84: Aufnahmeöffnung
- 86: Antriebseinheit
- 88: Aufnahmeöffnung
- 90: Rahmeneinheit
- 92: Schienensystem
- 94: Teilplatte
- 96: Teilplatte
- 98: Verfahrensschritt
- 100: Verfahrensschritt
- 102: Verfahrensschritt
- 104: Verfahrensschritt
- 106: Bodenverankerung

## Patentansprüche

1. Präzisions-Ein- und/oder Auslagervorrichtung (54) zu einem zumindest teilautomatisierten Einlagern und/oder Auslagern von Werkzeugen (10), insbesondere Komplettwerkzeugen (12), und/oder Werkzeugfuttern (14) in und/oder aus einem Lagerlift (16), mit zumindest einer, durch einen Handhabungsroboter (18) bestückbaren und eine Mehrzahl an Lagerplätzen (20, 22) ausbildenden Halteeinheit (24) für Werkzeuge (10), insbesondere Komplettwerkzeuge (12), und/oder Werkzeugfutter (14), **dadurch gekennzeichnet, dass** die Halteeinheit (24) zumindest ein Formschlusszentrierelement (26) aufweist, welches dazu vorgesehen ist, zu einer submillimetergenauen horizontalen Ausrichtung der Halteeinheit (24) mit einem Zentrierbolzen (28) und/oder einer Zentrierausnehmung wechselzuwirken.

2. Präzisions-Ein- und/oder Auslagervorrichtung (54) nach Anspruch 1, **dadurch gekennzeichnet, dass** die Halteeinheit (24) zumindest ein weiteres Formschlusszentrierelement (30) aufweist, welches dazu vorgesehen ist, zu einer submillimetergenauen horizontalen Ausrichtung der Halteeinheit (24) mit einem weiteren Zentrierbolzen (32) und/oder mit einer weiteren Zentrierausnehmung wechselzuwirken.

3. Präzisions-Ein- und/oder Auslagervorrichtung (54) nach Anspruch 2, **dadurch gekennzeichnet, dass** das Formschlusszentrierelement (26) und das weitere Formschlusszentrierelement (30) in, insbesondere entlang einer Haupterstreckungsrichtung (34) der Halteeinheit (24) gesehen, gegenüberliegenden Endbereichen (36, 38) der Halteeinheit (24) angeordnet sind.

4. Präzisions-Ein- und/oder Auslagervorrichtung (54) nach einem der vorhergehenden Ansprüche, **dadurch gekennzeichnet, dass** zumindest ein die Lagerplätze (20, 22) ausbildender Teil (40) der Halteeinheit (24) als ein gelasertes und/oder genietetes Blechbiegeteil ausgebildet ist.

5. Präzisions-Ein- und/oder Auslagervorrichtung (54) nach einem der vorhergehenden Ansprüche, **dadurch gekennzeichnet, dass** zumindest ein das Formschlusszentrierelement (26) aufweisender Teil (42) der Halteeinheit (24) als ein, insbesondere von einem Blech verschiedenes, vorzugsweise massives, Metallelement ausgebildet ist.

6. Präzisions-Ein- und/oder Auslagervorrichtung (54) nach einem der vorhergehenden Ansprüche, **dadurch gekennzeichnet, dass** die Halteeinheit (24) zumindest zwei unterschiedliche Arten von Lagerplätzen (20, 22) ausbildet.

7. Präzisions-Ein- und/oder Auslagervorrichtung (54) nach Anspruch 6, **dadurch gekennzeichnet, dass** eine erste Art von Lagerplatz (20) für eine Ein- und/oder Auslagerung von Werkzeugen (10), insbesondere Komplettwerkzeugen (12), und/oder Werkzeugfuttern (14) aus einer zumindest teilweise vertikalen Ein- und/oder Auslagerrichtung (44) ausgebildet ist.

8. Präzisions-Ein- und/oder Auslagervorrichtung (54) nach Anspruch 7, **dadurch gekennzeichnet, dass** eine zweite Art von Lagerplatz (22) für eine Ein- und/oder Auslagerung von Werkzeugen (10), insbesondere Komplettwerkzeugen (12), und/oder Werkzeugfuttern (14) aus einer horizontalen Ein- und/oder Auslagerrichtung (46) ausgebildet ist.

9. Präzisions-Ein- und/oder Auslagervorrichtung (54) nach einem der vorhergehenden Ansprüche, **dadurch gekennzeichnet, dass** zumindest einer der Lagerplätze (20, 22) ein (Dreh-)Lagefixierungselement (48) für Werkzeugfutter (14) aufweist.

10. Präzisions-Ein- und/oder Auslagervorrichtung (54) nach einem der vorhergehenden Ansprüche, **gekennzeichnet durch** eine ebene Unterlageplatte (50), welche die Halteeinheit (24) horizontalverschieblich trägt.

11. Präzisions-Ein- und/oder Auslagervorrichtung (54) nach Anspruch 10, **dadurch gekennzeichnet, dass** die Halteeinheit (24) schwimmend auf der Unterlageplatte (50) gelagert ist.

12. Präzisions-Ein- und/oder Auslagervorrichtung (54) nach Anspruch 10 oder 11, **dadurch gekennzeichnet, dass** die Unterlageplatte (50) aus einem Kunststoff, insbesondere aus einem Polyvinylchlorid (PVC), ausgebildet ist.

13. Präzisions-Ein- und/oder Auslagersystem (52) mit einem Lagerlift (16), welcher eine Mehrzahl an jeweils eine Halteeinheit (24) umfassenden Präzisions-Ein- und/oder Auslagervorrichtungen (54) nach einem der vorhergehenden Ansprüche aufweist, mit einem Handhabungsroboter (18) zur Bestückung des Lagerlifts (16) mit Werkzeugen (10), insbesondere Komplettwerkzeugen (12), und/oder Werkzeugfuttern (14) und mit zumindest einer, einen automatisiert bewegbaren Zentrierbolzen (28) und/oder eine automatisiert bewegbare Zentrierausnehmung aufweisenden Zentriereinrichtung (56) zur submillimetergenauen horizontalen Ausrichtung von Halteeinheiten (24) mittels eines Erzeugens eines Formschlusses des Zentrierbolzens (28) und/oder der Zentrierausnehmung mit zumindest einem Formschlusszentrierelement (26) der Halteeinheiten (24).

14. Präzisions-Ein- und/oder Auslagersystem (52) nach Anspruch 13, **dadurch gekennzeichnet, dass** der Zentrierbolzen (28) der Zentriereinrichtung (56) eine konische Außenform (58) aufweist und/oder dass die Zentrierausnehmung der Zentriereinrichtung (56) eine konische Innenform aufweist.

15. Präzisions-Ein- und/oder Auslagersystem (52) nach Anspruch 13 oder 14, **dadurch gekennzeichnet, dass** der Zentrierbolzen (28) der Zentriereinrichtung (56) und/oder die Zentrierausnehmung der Zentriereinrichtung (56) automatisiert entlang einer Vertikalrichtung (60) bewegbar ist.

16. Präzisions-Ein- und/oder Auslagersystem (52) nach einem der Ansprüche 13 bis 15, **gekennzeichnet durch** eine weitere Zentriereinrichtung (62) mit einem weiteren Zentrierbolzen (32) und/oder mit einer weiteren Zentrierausnehmung, welcher/welche zu einem mit dem Zentrierbolzen (28) der Zentriereinrichtung (56) und/oder mit der Zentrierausnehmung der Zentriereinrichtung (56) synchronisierten Formschluss-Wechselwirkung mit einem weiteren Formschlusszentrierelement (30) derselben Halteeinheit (24) vorgesehen ist.

17. Präzisions-Ein- und/oder Auslagersystem (52) nach einem der Ansprüche 13 bis 16, **dadurch gekennzeichnet, dass** der Lagerlift (16) dazu vorgesehen ist, wahlweise jeweils eine der mehreren in dem Lagerlift (16) umfassten Präzisions-Ein- und/oder Auslagervorrichtungen (54) / Halteeinheiten (24) für einen Zugriff des Handhabungsroboters (18) bereitzustellen.

18. Präzisions-Ein- und/oder Auslagersystem (52) nach einem der Ansprüche 13 bis 17, **dadurch gekennzeichnet, dass** der Lagerlift (16) zumindest eine Übergabefläche (64) und/oder eine Schublade aufweist, welche/r zumindest während einer Ein- und/oder Auslagerung von Werkzeugen (10), insbesondere von Komplettwerkzeugen (12), und/oder von Werkzeugfuttern (14) in und/oder aus dem Lagerlift (16), die Halteeinheit (24) einer der mehreren in dem Lagerlift (16) umfassten Präzisions-Ein-und/oder Auslagervorrichtungen (54) trägt.

19. Präzisions-Ein- und/oder Auslagersystem (52) nach einem der Ansprüche 13 bis 18, **dadurch gekennzeichnet, dass** zumindest der Lagerlift (16) und die Zentriereinrichtung (56), und vorzugsweise der Handhabungsroboter (18), zumindest in einem Übergabebereich (66) des Präzisions-Ein- und/oder Auslagersystems (52) fest auf einer gemeinsamen Unterlage und/oder an einem Boden (68) fixiert sind.

20. Präzisions-Ein- und/oder Auslagersystem (52) nach einem der Ansprüche 13 bis 19, **gekennzeichnet durch** eine, insbesondere der Zentriereinrichtung (56) zugeordnete, Halteeinheiten-Erkennungsvorrichtung (70), welche zu einer Identifizierung einzelner Halteeinheiten (24) des Lagerlifts (16) vorgesehen ist.

21. Verfahren zu einem zumindest teilautomatisierten Präzisions-Ein-und/oder Auslagern von Werkzeugen (10), insbesondere Komplettwerkzeugen (12), und/oder Werkzeugfuttern (14) in und/oder aus einem Lagerlift (16), insbesondere mittels eines Präzisions-Ein- und/oder Auslagersystems (52) nach einem der Ansprüche 13 bis 20.

22. Verfahren nach Anspruch 21, **gekennzeichnet durch** einen horizontalen Detail-Positionierschritt (72), in welchem eine submillimetergenaue Ausrichtung einer, insbesondere zuvor aus dem Lagerlift (16) herausbewegten, Halteeinheit (24) relativ zu einem Handhabungsroboter (18) des Präzisions-Ein- und/oder Auslagersystems (52) mittels eines Erzeugens eines Formschlusses eines Zentrierbolzens (28), vorzugsweise zumindest zweier Zentrierbolzen (28, 32), und/oder einer Zentrierausnehmung , vorzugsweise zumindest zweier Zentrierausnehmungen, mit einem Formschlusszentrierelement (26), vorzugsweise mit jeweils einem Formschlusszentrierelement (26, 30), der horizontalbeweglich gelagerten Halteeinheit (24) vorgenommen wird.

23. Verfahren nach Anspruch 22, **dadurch gekennzeichnet, dass** vor, während und/oder nach dem Detail-Positionierschritt (72) eine eindeutige automatisierte Identifizierung der jeweiligen Halteeinheit (24) vorgenommen wird.
